# EUROPEAN PATENT APPLICATION

(11) **EP 4 206 864 A1**
(43) Date of publication of application: **05.07.2023**
(21) Application number: 22839610.7
(22) Date of filing: 13.09.2022
(51) Int. Cl.: G06F 1/329

(54) **PROCESS SCHEDULING METHOD AND TERMINAL DEVICE**

(30) Priority: 22.11.2021 CN 202111383522
(71) Applicant: Honor Device Co., Ltd., Shenzhen, Guangdong 518040 (CN)
(72) Inventor: HUANG, Wen, Shenzhen, Guangdong 518040 (CN); ZHAO, Jing, Shenzhen, Guangdong 518040 (CN)
(74) Representative: Isarpatent
(86) International application number: PCT/CN2022/118545
(87) International publication number: WO 2023/087875

(57) **Abstract**

This application provides a process scheduling method and a terminal device, and relates to the field of terminal technologies. According to the process scheduling method, for a first process with a first tag in a process set, when the first process is instructed to be scheduled, the terminal device prohibits scheduling of the first process. In this way, a CPU of the terminal device does not execute the first process, that is, the CPU does not allocate resources to the first process. Therefore, power consumption of the terminal device is reduced, and standby time of the terminal device is prolonged. Alternatively, the first process is set at the end of a process queue to be scheduled, because the terminal device always executes, from the process queue to be scheduled, a top process in the process queue to be scheduled. In this way, the terminal device has a reduced probability of executing the first process, that is, the CPU allocates fewer resources to the first process, so that the power consumption of the terminal device is also reduced, and the standby time of the terminal device is prolonged.

## Description

This application claims priority to Chinese Patent Application No. 202111383522.0, filed with the China National Intellectual Property Administration on November 22, 2021 and entitled "PROCESS SCHEDULING METHOD AND TERMINAL DEVICE", which is incorporated herein by reference in its entirety.

### TECHNICAL FIELD

This application relates to the field of terminal technologies, and in particular, to a process scheduling method and a terminal device.

### BACKGROUND

Currently, with development of terminal technologies, terminal devices have become a part of people's work and life. A plurality of applications (applications, APPs) are usually installed on a terminal device. Different applications may provide a user with different services, enriching and facilitating life of the user.

Generally, after a user opens an application on a terminal device, the terminal device starts to run a process of the application opened in the foreground. In this way, the application may provide the user with a corresponding service.

However, the application requires high power consumption during running. This will affect standby time of the terminal device.

### SUMMARY

This application provides a process scheduling method and a terminal device, so as to resolve the problem that standby time of the terminal device is affected due to high power consumption of an application running in the foreground.

According to a first aspect, this application provides a process scheduling method, including: a terminal device obtains a process set of a target application running in the foreground; the terminal device obtains a first tag of a first process when the first process in the process set is instructed to be scheduled; the terminal device identifies the first tag; and when the first tag is used to indicate that scheduling of the first process is prohibited, the terminal device prohibits the scheduling of the first process; or when the first tag is used to indicate that a priority of the first process is lower than a preset threshold, the terminal device sets the first process at the end of a process queue to be scheduled.

According to the process scheduling method provided in this application, for the first process with the first tag in the process set, when the first process is instructed to be scheduled, the terminal device prohibits the scheduling of the first process. In this way, a CPU of the terminal device does not execute the first process, that is, the CPU does not allocate resources to the first process. Therefore, power consumption of the terminal device is reduced, and standby time of the terminal device is prolonged. Alternatively, the first process is set at the end of a process queue to be scheduled, because the terminal device always executes, from the process queue to be scheduled, a top process in the process queue to be scheduled. In this way, the terminal device has a reduced probability of executing the first process, that is, the CPU allocates fewer resources to the first process, so that the power consumption of the terminal device is also reduced, and the standby time of the terminal device is prolonged.

In a possible implementation, the first tag is a TASK_INTERRUPTIBLE identifier, a TASK_STOPPED identifier, or a TASK_TRACED identifier. The TASK_INTERRUPTIBLE identifier, the TASK_STOPPED identifier, or the TASK_TRACED identifier is used to indicate that scheduling of the first process is prohibited.

In a possible implementation, after the terminal device sets the first process at the end of a process queue to be scheduled, the method provided in this application further includes: the terminal device executes, from the process queue to be scheduled, a top process in the process queue to be scheduled.

Therefore, the terminal device has a low probability of scheduling the first process, so that fewer resources are allocated to the first process, thereby reducing power consumption.

In a possible implementation, before the terminal device obtains a process set of a target application running in the foreground, the method provided in this application further includes: the terminal device marks the first tag for the first process.

In this way, the terminal device may identify content of the first tag to decide how to schedule the first process.

Further, that the terminal device marks the first tag for the first process includes: the terminal device determines whether a hardware module of the terminal device needs to be invoked to execute the first process; and when the hardware module does not need to be invoked, the terminal device marks the first tag of the first process to indicate that scheduling is prohibited.

When the terminal device invokes the hardware module, a target function may be implemented. Generally, the target function implemented by invoking the hardware module is a function that can be perceived by a user. Then, if the hardware module does not need to be scheduled when the first process is executed, the first tag of the first process may be marked to indicate that scheduling is prohibited, which does not affect user experience.

Further, the method provided in this application further includes: the terminal device obtains an operating parameter of the first process when the hardware module needs to be invoked; and the terminal device sets the first tag to a priority lower than a preset threshold when the operating parameter meets a preset condition.

When the terminal device invokes the hardware module, a target function can be implemented. Then, when the preset condition is met, it indicates that the target function is a function that the user is not interested in. In this way, the terminal device may mark the first tag of the first process to indicate the priority lower than the preset threshold, which does not affect user experience.

Further, when the terminal device determines that the hardware module is a communication module, the operating parameter is a data transmission rate when the first process is executed. That the terminal device sets the first tag to a priority lower than a preset threshold when the operating parameter meets a preset condition includes: the terminal device obtains a type of the target application. When the type of the target application is not an instant chat application, the terminal device determines whether the data transmission rate is lower than a preset rate threshold. When the data transmission rate is lower than the preset rate threshold, the terminal device sets the first tag to a priority lower than the preset threshold.

When the terminal device runs an application that is not an instant chat application, and invokes the communication module for data transmission when executing the first process, and the data transmission rate is lower than the preset rate threshold, it indicates that the terminal device is executing a message sending and receiving function (the message sending and receiving function of the non-instant chat application is a function that the user is not interested in), then the first tag of the first process is marked with a priority lower than the preset threshold, which does not affect user experience.

In a possible implementation, the method provided in this application further includes: the terminal device obtains a first tag of a second process when the second process in the process set is instructed to be scheduled; the terminal device identifies the first tag of the second process; and when the first tag of the second process is used to indicate that scheduling of the second process is prohibited, the terminal device prohibits the scheduling of the second process; or when the first tag of the second process is used to indicate that a priority of the second process is lower than a preset threshold, the terminal device sets the second process at the end of a process queue to be scheduled.

In a possible implementation, the method provided in this application further includes: the terminal device updates the first tag when the first tag is used to indicate that scheduling of the first process is prohibited, and a quantity of times the first process is instructed to be invoked is greater than a preset threshold, where the updated first tag is used to indicate a priority; or the terminal device updates the first tag when the first tag is used to indicate that a priority is lower than a preset threshold, and a quantity of times the first process is instructed to be invoked is greater than a preset threshold, where a priority indicated by the updated first tag is higher than the preset threshold; and that the first process is instructed to be invoked is user-triggered.

In this way, content indicated by the first tag may be updated based on a behavior of the user.

In a possible implementation, the first process is a keep-alive process, or a message receiving process of a non-instant chat application.

In a possible implementation, before the terminal device obtains a process set of a target application running in the foreground, the method provided in this application further includes: the terminal device marks the first tag for the first process in response to an operation of a user.

In this way, content indicated by the first tag is set by the user.

Further, when the operation of the user is to prohibit a target function corresponding to the first process, the terminal device marks the first tag of the first process to indicate that scheduling is prohibited;
or further, when the operation of the user is to terminate the first process being executed, and a quantity of termination times exceeds a preset threshold, the terminal device sets the first tag to a priority lower than the preset threshold.

In a possible implementation, after that the terminal device prohibits the scheduling of the first process, or that the terminal device sets the first process at the end of a process queue to be scheduled, the method provided in this application further includes: the terminal device generates a process scheduling log of the target application running in the foreground; and the terminal device sends the process scheduling log to a test terminal in response to a log acquisition request from the test terminal.

In this way, the user may view the process scheduling log on a display interface of the test terminal.

According to a third aspect, this application further provides a terminal device, including a processor and a memory. The memory is configured to store code instructions; and the processor is configured to run the code instructions to enable an electronic device to perform the process scheduling method according to any one of the first aspect or the implementations of the first aspect.

According to a fourth aspect, this application further provides a computer-readable storage medium. The computer-readable storage medium stores instructions, and the instructions, when executed, enable a computer to perform the process scheduling method according to any one of the first aspect or the implementations of the first aspect.

According to a fifth aspect, this application further provides a computer program product, including a computer program. The computer program, when run, enables a computer to perform the process scheduling method according to any one of the first aspect or the implementations of the first aspect.

It should be understood that the technical solutions according to the second aspect to the fifth aspect of this application correspond to the technical solutions according to the first aspect of this application, and beneficial effects achieved by the aspects and corresponding feasible implementations are similar. Details are not described herein again.

### BRIEF DESCRIPTION OF DRAWINGS

FIG. 1 is a schematic diagram of an interface displaying a homepage interface of Kwai^{®} of a terminal device;
FIG. 2 is a schematic diagram of a hardware system architecture of a terminal device according to an embodiment of this application;
FIG. 3 is a schematic diagram of a software system architecture of a terminal device according to an embodiment of this application;
FIG. 4 is a flowchart I of a process scheduling method according to an embodiment of this application;
FIG. 5 is a schematic diagram of a process set of an application according to an embodiment of this application, including a first process and a second process;
FIG. 6(a)-FIG. 6(b) are a schematic diagram of an interface of Kwai triggered to run in the foreground of a mobile phone according to an embodiment of this application;
FIG. 7 is a schematic diagram of an interface displaying a process scheduling log of Kwai according to an embodiment of this application;
FIG. 8 is a schematic diagram of an interface displaying a process scheduling log of Kwai according to an embodiment of this application;
FIG. 9(a)-FIG. 9(b) are a schematic diagram of an interface in response to an advertising message transmission request when Kwai is running in the foreground of a mobile phone according to an embodiment of this application;
FIG. 10 is a second flowchart of a process scheduling method according to an embodiment of this application;
FIG. 11 is a third flowchart of a process scheduling method according to an embodiment of this application;
FIG. 12A-FIG. 12B are a fourth flowchart of a process scheduling method according to an embodiment of this application;
FIG. 13 is a schematic diagram of functional modules of a process scheduling apparatus according to an embodiment of this application;
FIG. 14 is a schematic diagram of a hardware structure of a terminal device according to an embodiment of this application; and
FIG. 15 is a schematic diagram of a structure of a chip according to an embodiment of this application.

### DESCRIPTION OF EMBODIMENTS

To clearly describe the technical solutions in embodiments of this application, in embodiments of this application, words such as "first" and "second" are used to distinguish between same items or similar items with basically the same functions and effects. For example, a first value and a second value are merely used to distinguish between different values, but not limit a sequence thereof. A person skilled in the art may understand that the words such as "first" and "second" do not limit a quantity or an execution order, and the words such as "first" and "second" do not necessarily indicate a difference.

It should be noted that, in this application, words such as "for example" or "such as" are used to indicate an example, illustration, or description. Any embodiment or design solution described as "for example" or "such as" in this application should not be construed as being preferred or advantageous over other embodiments or design solutions. To be precise, the use of the words such as "example" or "for example" is intended to present a related concept in a specific manner.

In this application, "at least one" refers to one or more, and "a plurality of" refers to two or more. "And/or", which describes an association relationship between associated objects, represents that three relationships may exist. For example, A and/or B may represent the following cases: Only A exists, both A and B exist, and only B exists. A and B may be singular or plural. The symbol "/" usually indicates an "or" relationship between the associated objects. "At least one of the following items" or an expression similar thereto means any combination of these items, including a single item or any combination of plural items. For example, at least one of a, b, or c may represent a, b, c, a-b, a-c, b-c, or a-b-c, where a, b, and c may be singular or plural.

Generally, after a user opens an application on a terminal device, the terminal device starts to run a process of the application opened in the foreground. In this way, the application may provide the user with a corresponding service.

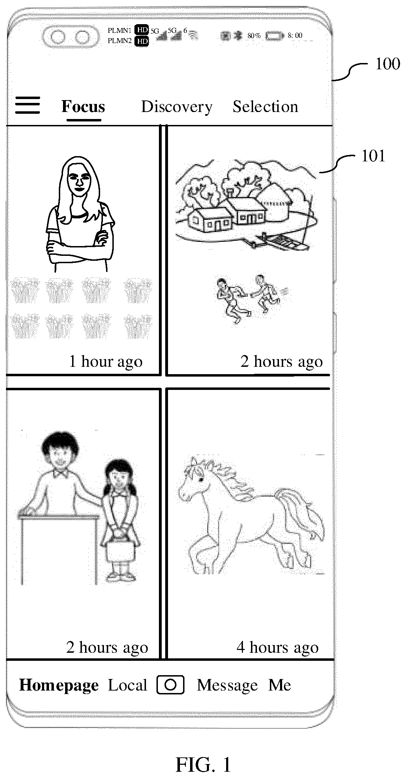

For example, when a user needs to watch live content, the user can open a homepage interface of Kwai@ to select live content to watch. As shown in (a) in FIG. 1, a terminal device displays a homepage interface 101 of Kwai@ in response to a Kwai@ opening operation. It may be understood that when Kwai^{®} runs in the foreground of the terminal device, the terminal device may obtain a process list for running Kwai@ in the foreground. The process list includes: an interface data acquisition process, a data parsing process, and a page display process (it may be understood that the interface data acquisition process, the data parsing process, and the page display process may also be a host process) that are in a TASK_RUNNING state; and a video playback process, an audio playback process, a video decoding process, a message sending and receiving process, and a keep-alive process that are in a TASK_INTERRUPTIBLE state. When a process in the process list is closed by a system during execution due to excessive use of resources or an exception, Kwai@ of the terminal device may set the keep-alive process in a TASK_RUNNING state (that is, instruct to schedule the keep-alive process) to execute the keep-alive process, so as to set a closed process in an executable state.

However, the user may not care about a corresponding function when the terminal device is executing the keep-alive process. Therefore, if the terminal device schedules the keep-alive process at a high frequency, power consumption of the terminal device is high, thereby affecting standby time of the terminal device.

In view of this, this application provides a process scheduling method, including: a terminal device obtains a process set of a target application running in the foreground; the terminal device obtains a first tag of a first process when the first process in the process set is instructed to be scheduled; the terminal device identifies the first tag; and when the first tag is used to indicate that scheduling of the first process is prohibited, the terminal device prohibits the scheduling of the first process; or when the first tag is used to indicate that a priority of the first process is lower than a preset threshold, the terminal device sets the first process at the end of a process queue to be scheduled.

It may be understood that, according to the process scheduling method provided in this application, for the first process with the first tag in the process set, when the first process is instructed to be scheduled, the terminal device prohibits the scheduling of the first process. In this way, a CPU of the terminal device does not execute the first process, that is, the CPU does not allocate resources to the first process. Therefore, power consumption of the terminal device is reduced, and standby time of the terminal device is prolonged. Alternatively, the first process is set at the end of a process queue to be scheduled, because the terminal device always executes, from the process queue to be scheduled, a top process in the process queue to be scheduled. In this way, the terminal device has a reduced probability of executing the first process, that is, the CPU allocates fewer resources to the first process, so that the power consumption of the terminal device is also reduced, and the standby time of the terminal device is prolonged.

It may be understood that the terminal device may also be referred to as a terminal (terminal), user equipment (user equipment, UE), a mobile station (mobile station, MS), a mobile terminal (mobile terminal, MT), and the like. The terminal device may be a mobile phone (mobile phone), a smart TV, a wearable device, a Pad (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal device are not limited in this embodiment of this application.

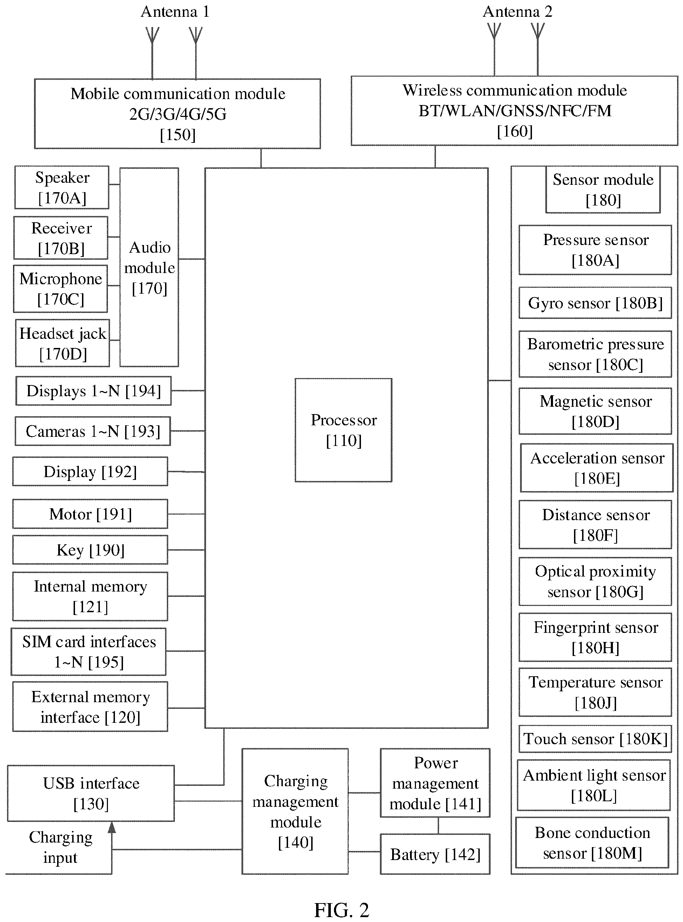

To better understand the embodiments of this application, the following describes a structure of the terminal device in the embodiments of this application. For example, FIG. 2 is a schematic diagram of a structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a sensor module 180, a key 190, an indicator 192, a camera 193, a display 194, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the terminal device. In some other embodiments of this application, the terminal device may include more or fewer components than those shown in the figure, or combine some components, or split some components, or have different component arrangements. The illustrated components may be implemented by using hardware, software or a combination of software and hardware.

The processor 110 may include one or more processing units. Different processing units may be independent devices, or may be integrated in one or more processors. A memory may further be disposed in the processor 110, to store instructions and data. The processor 110 may be configured to schedule processes of an application, to implement functions corresponding to the processes. For example, a display process is scheduled to complete video display, or an audio playback process is scheduled to complete audio playback, which is not limited herein.

A wireless communication function of the terminal device may be implemented by using the antenna 1, the antenna 2, the mobile communication module 150, the wireless communication module 160, a modem processor, a baseband processor, and the like.

The mobile communication module 150 may provide a wireless communication solution that is applied to the terminal device, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation.

The terminal device implements a display function by using a GPU, the display 194, an application processor, and the like. The GPU is a microprocessor for image processing, and connects the display 194 to the application processor. The GPU is configured to perform mathematical and geometric calculations for graphics rendering.

The display 194 is configured to display an image, a video, and the like. The display 194 includes a display panel. In some embodiments, the terminal device may include one or N displays 194, where N is a positive integer greater than 1.

The terminal device may implement a photographing function by using an ISP, the camera 193, a video codec, the GPU, the display 194, the application processor, and the like.

The camera 193 is configured to capture a still image or a video. In some embodiments, the terminal device may include one or N cameras 193, where N is a positive integer greater than 1.

The external memory interface 120 may be configured to connect to an external memory card such as a Micro SD card, so as to expand a storage capacity of the terminal device. The external memory card communicates with the processor 110 by using the external memory interface 120, to implement a data storage function.

The internal memory 121 may be configured to store computer executable program code, where the executable program code includes instructions. The internal memory 121 may include a program storage area and a data storage area.

The terminal device may implement an audio function, such as music playing and recording, by using the audio module 170, the speaker 170A, the receiver 170B, the microphone 170C, the application processor, and the like.

The audio module 170 is configured to convert digital audio information into an analog audio signal for output, and is also configured to convert an analog audio input into a digital audio signal. The speaker 170A, also referred to as a "horn", is configured to convert an audio electrical signal into a sound signal. The terminal device may be used to listen to music or answer a call in a hands-free mode through the speaker 170A. The receiver 170B, also referred to as an "earpiece", is configured to convert an audio electrical signal into a sound signal. When a call is answered or audio information is listened to by using the terminal device, the receiver 170B may be put close to a human ear to listen to a voice. The microphone 170C, also referred to as a "mike" or a "mic", is configured to convert a sound signal into an electrical signal.

A software system of the terminal device may use a layered architecture, an eventdriven architecture, a microkernel architecture, a micro-service architecture, a cloud architecture, or the like. Details are not described herein.

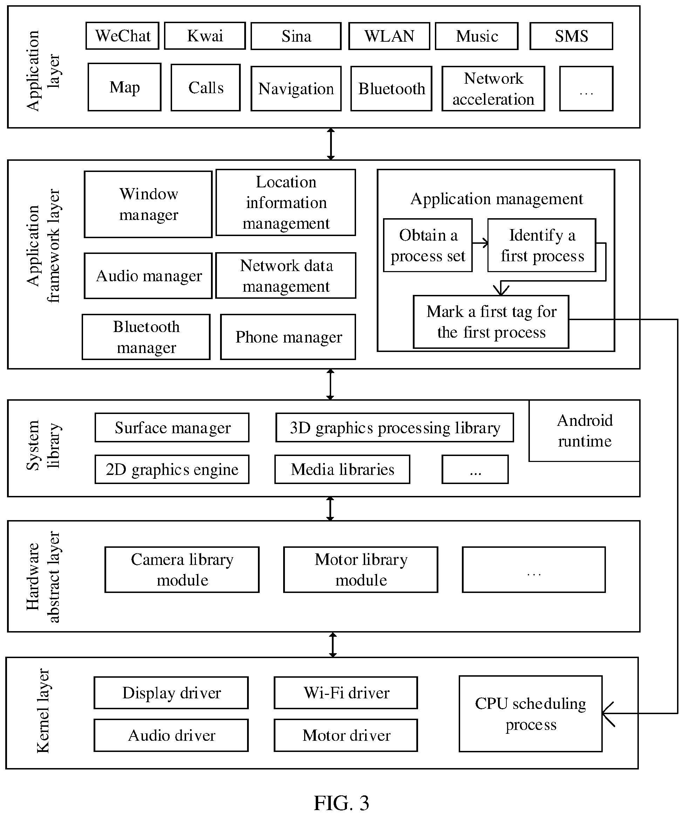

In this embodiment of this application, an Android system with a layered architecture is used as an example to describe a software architecture of a terminal device 100. FIG. 3 is a block diagram of a software architecture of a terminal device according to an embodiment of this application. The layered architecture divides a software system of the terminal device 100 into several layers, and each layer has a clear role and division of labor. The layers communicate with each other by using software interfaces. In some embodiments, the Android system may be divided into five layers: an application layer (applications), an application framework layer (application framework), Android runtime (Android runtime) and system library, a hardware abstract layer (hardware abstract layer, HAL), and a kernel layer (kernel).

The application layer may include a series of application packages. The application layer runs an application by invoking an application programming interface (application programming interface, API) provided by the application framework layer. As shown in FIG. 3, the application packages may include applications such as WeChat^{®}, Kwai@, Sina@, Calendar, Calls, Map, Navigation, WLAN, Bluetooth, Music, Video, and SMS.

The application framework layer provides an API and a programming framework for applications at the application layer. The application framework layer includes some predefined functions. As shown in FIG. 3, the application framework layer may include a window manager, a phone manager, an audio manager, a Bluetooth manager, a network data manager, a location information manager, an application manager, and the like.

The window manager is configured to manage a window program. The window manager may obtain a display size, determine whether there is a status bar, lock a screen, take a screenshot, and the like. A content provider is configured to store and obtain data, and enable these data to be accessible to an application. The data may include videos, images, audio, calls that are made and answered, and the like. A view system includes visual controls, such as a control for displaying text and a control for displaying pictures. The view system may be configured to build an application. A display interface may include one or more views. For example, a display interface including an SMS notification icon may include a view for displaying text and a view for displaying pictures. The phone manager is configured to provide communication functions of the terminal device 100, such as call state management (including connecting, hanging up, or the like). The Bluetooth manager may be configured to implement Bluetooth functions, such as enabling or disabling Bluetooth, and controlling a Bluetooth module for data transmission. The network data manager may be configured to manage network data. The location information manager is configured to manage location information collected by a GPS module. The application manager may be configured to obtain a process set of a target application running in the foreground, and identify, from the process set, a first process marked with a first tag.

The Android runtime includes a core library and a virtual machine. The Android runtime is responsible for scheduling and management of an Android system. The core library includes two parts: functions to be invoked by java language, and a core library of Android. The application layer and the application framework layer run on the virtual machine. The virtual machine executes JAVA files at the application layer and the application framework layer as binary files. The virtual machine is configured to implement functions such as object lifecycle management, stack management, thread management, security and exception management, and garbage collection. A system library may include a plurality of functional modules, such as a surface manager (surface manager), media libraries (Media Libraries), a 3D graphics processing library (for example, an OpenGL ES), and a 2D graphics engine (for example, an SGL).

The surface manager is configured to manage a display subsystem, and provide fusion of 2D and 3D layers for a plurality of applications. The media libraries support playback and recording of audio and videos in a plurality of commonly used formats, still image files, and the like. The media libraries may support a plurality of audio and video encoding formats, such as MPEG4, H.264, MP3, AAC, AMR, JPG, and PNG. The 3D graphics processing library is used to implement 3D graphics drawing, image rendering, composition, layer processing, and the like. The 2D graphics engine is a graphics engine for 2D graphics.

The hardware abstract layer may include a plurality of library modules, and the library modules may be, for example, a camera library module, a motor library module, and the like. The Android system may load a corresponding library module for device hardware, to implement accessing of the device hardware by the application framework layer. The device hardware may include, for example, a motor and a camera in the terminal device.

The kernel layer is a layer between hardware and software. The kernel layer is used to drive the hardware to enable the hardware to operate. The kernel layer includes at least a display driver, a camera driver, an audio driver, a sensor driver, a motor driver, and a CPU scheduler. This is not limited in this embodiment of this application. When the first tag is used to indicate that scheduling of the first process is prohibited, after the CPU is instructed to schedule the first process, the CPU can identify the first tag of the first process, so as to prohibit the scheduling of the first process. The first tag may also be used to indicate that a priority of the first process is lower than a preset threshold. When the first process is instructed to be scheduled, the CPU may identify that the first process is marked with the first tag. In this way, the CPU adds the first process to the end of a process queue to be scheduled.

Technical terms used in this application:
Process (Process): a running activity of a computer program on a data set. As a basic unit for resource allocation and scheduling of a system, a process is the basis of a structure of an operating system.

Keep-alive process: When a keep-alive process is executed, a closed process may be activated. A process may be closed due to excessive use of resources or an exception.

Process in a TASK_RUNNING state (TASK_RUNNING): a process in an R state, which refers to a process being executed on a CPU or a process in a queue to be scheduled.

Process in a TASK_INTERRUPTIBLE state (TASK_INTERRUPTIBLE): a process in an S state, which refers to a process in a sleep state. When the process is instructed to be scheduled, the process is awakened and is in a TASK_RUNNING state.

Process in a TASK_UNINTERRUPTIBLE state (TASK_UNINTERRUPTIBLE): a process in a D state, which refers to a process that is suspended and goes to sleep. However, when the process is instructed to be scheduled, the process remains asleep and is not in a TASK_RUNNING state.

Process in a TASK_STOPPED state (TASK_STOPPED): a process in a T state. When a process receives a stop instruction, the process is in a TASK_STOPPED state. The process in the TASK_STOPPED state is not allowed to reset a corresponding signal processing function through invocation of a signal series by a system. That is, when the process is instructed to be scheduled, the process remains in the TASK_STOPPED state and is not in a TASK_RUNNING state.

Process in a TASK_TRACED state (TASK_TRACED): a process in a T state. When the process is stopped, the process waits for a process that traces it to operate on it. A process in a TASK_TRACED state cannot be awakened in response to a wake-up instruction, that is, the process remains in a TASK_STOPPED state and is not in a TASK_RUNNING state.

For example, a mobile phone 100 is used as the terminal device to describe a process scheduling method provided in an embodiment of this application. This example does not constitute a limitation on this embodiment of this application. The following embodiments may be combined with each other, and the same or similar concepts or processes are not described again.

In daily life, the mobile phone 100 may have a plurality of different types of applications to meet different use requirements of a user. For example, the mobile phone 100 has applications such as instant chat applications, live streaming applications, and news browsing applications. Further, the instant chat applications may include applications such as WeChat^{®}, QQ^{®}, and DingTalk^{®}; the live streaming applications may include applications such as Tik Tok, and Kwai^{®}; and the news browsing applications may include applications such as Sina^{®}, Sohu^{®}, and Toutiao^{®}.

Any one of the applications corresponds to a process set. For example, a process set corresponding to WeChat^{®} includes a message sending and receiving process, a data download process, a positioning process, a keep-alive process, and the like; a process set corresponding to Kwai^{®} includes a message sending and receiving process, a video display process, an audio playback process, a keep-alive process, and the like; and a process set corresponding to Sina^{®} includes a message sending and receiving process, a page download process, a page display process, a keep-alive process, and the like.

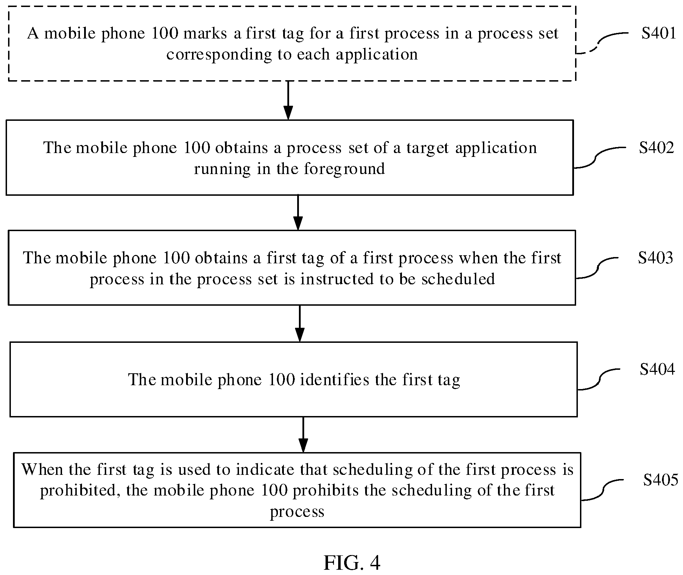

FIG. 4 is a schematic flowchart of a process scheduling method according to an embodiment of this application. As shown in FIG. 4, the process scheduling method provided in this embodiment of this application may include:

S401: The mobile phone 100 marks a first tag for a first process in a process set corresponding to each application.

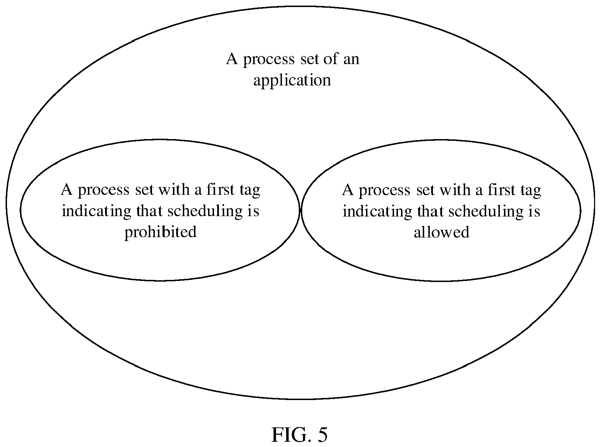

For example, when the first tag is used to indicate that scheduling is prohibited, the first tag may be a TASK_UNINTERRUPTIBLE identifier "TASK_UNINTERRUPTIBLE", a TASK_STOPPED identifier "TASK_STOPPED", a TASK_TRACED identifier "TASK_TRACED", or the like, which is not limited herein. It may be understood that the TASK_INTERRUPTIBLE identifier, the TASK_STOPPED identifier, or the TASK_TRACED identifier may be used to indicate that scheduling of the first process is prohibited. Certainly, the first tag may also be another value, symbol, letter, or the like, which is not limited herein. In addition, when the first tag is used to indicate that scheduling is allowed, the first tag may be a TASK_RUNNING identifier "TASK_RUNNING" or a TASK_INTERRUPTIBLE identifier "TASK_INTERRUPTIBLE". It may be understood that, as shown in FIG. 5, the process set of each application may be divided into a process set with a first tag indicating that scheduling is prohibited, and a process set with a first tag indicating that scheduling is allowed.

For example, specific implementations of S401 include but are not limited to the following two implementations:

First implementation: The mobile phone 100 may determine whether a hardware module of the mobile phone 100 needs to be invoked to execute the first process. When the hardware module does not need to be invoked, the mobile phone 100 marks the first tag of the first process to indicate that scheduling is prohibited.

It may be understood that when the mobile phone 100 invokes the hardware module, a target function may be implemented. Generally, the target function implemented by invoking the hardware module is a function that can be perceived by a user. For example, for an instant chat application, the target function may be a message sending and receiving function implemented by invoking a communication module, a data download function implemented by invoking a communication module, a positioning function implemented by invoking a positioning module, or the like. For a live streaming application, the target function may be a video playback function implemented by invoking a display module, a message sending and receiving function implemented by invoking a communication module, or the like. For a news browsing application, the target function may be a data display function implemented by invoking a display module, a message sending and receiving function implemented by invoking a communication module, or the like. Therefore, when the hardware module does not need to be invoked, the function implemented after the mobile phone 100 executes the first process may not be perceived by the user, so that the mobile phone 100 may mark the first tag indicating that scheduling is prohibited for the first process that does not need to invoke the hardware module.

Hardware modules invoked by processes of each application may be shown in Table 1.

**Table 1**

| Application name | Process name | Hardware module invoked |
|---|---|---|
| WeChat^{®} | Message sending and receiving process | Communication module |
| | Data download process | Communication module |
| | ... | ... |
| | Positioning process | GPS module |
| | Keep-alive process | / |
| Kwai@ | Message sending and receiving process | Communication module |
| | Video display process | Display and video decoder |
| | ... | ... |
| | Audio playback process | Audio decoding module and speaker |
| | Keep-alive process | / |
| Sina^{®} | Message sending and receiving process | Communication module |
| | Page download process | Communication module |
| | Page display process | Display |
| | ... | ... |
| | Keep-alive process | / |

It can be learned from Table 1 that no hardware module is invoked in keep-alive processes of WeChat^{®}, Kwai@ and Sina@. Therefore, the mobile phone 100 may mark first tags of the keep-alive processes of WeChat^{®}, Kwai@ and Sina^{®} to indicate that scheduling is prohibited. It may be understood that the keep-alive processes are first processes marked with first tags indicating that scheduling is prohibited.

The mobile phone 100 may mark first tags of the message sending and receiving process, the data download process and the positioning process of WeChat^{®} to indicate that scheduling is allowed; mark first tags of the video display process, the audio playback process and the message sending and receiving process of Kwai^{®} to indicate that scheduling is allowed; and mark first tags of the message sending and receiving process, the page download process and the page display process to indicate that scheduling is allowed.

Second implementation: When an operation of the user is to prohibit a target function corresponding to the first process, the mobile phone 100 marks the first tag of the first process to indicate that scheduling is prohibited.

For example, when the mobile phone 100 runs a live streaming application in the foreground, the live streaming application is executing a message sending and receiving process to pop up an advertising window (to pop up the advertising window is a target function). The advertising window includes a first control and a second control (not shown), the first control is used to indicate that receiving of an advertising message is allowed, and the second control is used to indicate that receiving of an advertising message is prohibited. In response to a user-triggered operation on the second control, the mobile phone 100 marks a first tag of the message sending and receiving process of the live streaming application to indicate that scheduling is prohibited.

It may be understood that a solution in S401 describes how the mobile phone 100 marks a first tag for a first process in a process set corresponding to each application in advance. The following describes how the mobile phone 100 prohibits the scheduling of the first process with reference to S402 to S405.

S402: The mobile phone 100 obtains a process set of a target application running in the foreground.

For example, an internal memory of the mobile phone 100 may pre-store a mapping relationship between a package name of each application and the process set. When the target application is running in the foreground, the mobile phone 100 may record a package name of the target application. Then, the mobile phone 100 may obtain the process set of the target application running in the foreground based on the package name of the target application and the mapping relationship.

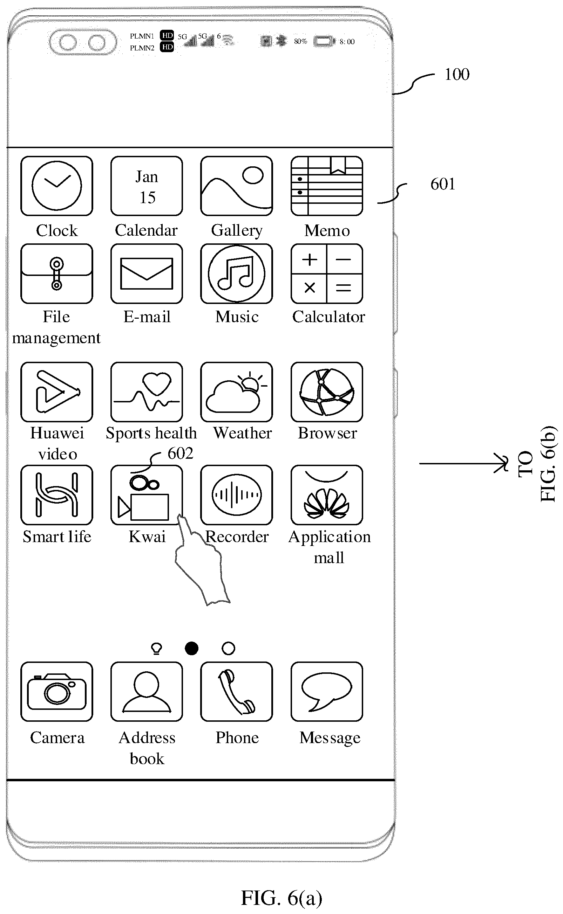

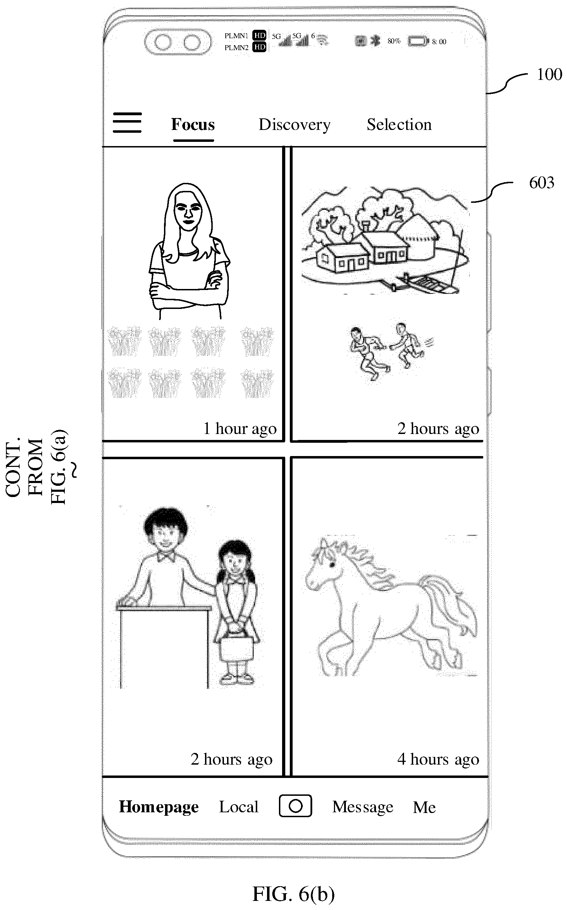

For example, Kwai@ is used as a target application to describe how the mobile phone 100 obtains a process set of Kwai@. As shown in FIG. 6(a)-FIG. 6(b), the mobile phone 100 displays a system desktop 601, and the system desktop 601 includes an icon 602 of Kwai^{®}. The mobile phone 100 may display a homepage interface 603 of Kwai@ in response to a user-triggered operation on the icon 602 of Kwai@. It may be understood that, by this time, the mobile phone 100 detects that Kwai@ is running in the foreground. Then, the mobile phone 100 obtains the process set of Kwai@ based on a package name of Kwai@ and the mapping relationship.

S403: The mobile phone 100 obtains a first tag of a first process when the first process in the process set is instructed to be scheduled.

It may be understood that there are two types of processes in the process set. The first type of processes are processes in the process queue to be scheduled, for example, a process in a TASK_RUNNING state "TASK_RUNNING". The second type of processes are processes not in the process queue to be scheduled, for example, a process in a TASK_INTERRUPTIBLE state "TASK_INTERRUPTIBLE", a process in a TASK_UNINTERRUPTIBLE state "TASK_UNINTERRUPTIBLE", or the like. It may be understood that a process in the process queue to be scheduled has been instructed to be scheduled, while a process not in the process queue to be scheduled can be instructed to be scheduled.

S404: The mobile phone 100 identifies the first tag.

S405: When the first tag is used to indicate that scheduling of the first process is prohibited, the mobile phone 100 prohibits the scheduling of the first process.

For example, a keep-alive process of Kwai@ is used as the first process and "TASK_UNINTERRUPTIBLE" is used as the first tag to describe how the mobile phone 100 prohibits the scheduling of the first process.

When an exception occurs to a process of Kwai@, the process may be closed, so that the mobile phone 100 instructs to schedule the keep-alive process to activate the closed process. Then, the mobile phone 100 identifies a first tag carried by the keep-alive process. When the mobile phone 100 identifies that the keep-alive process carries "TASK_UNINTERRUPTIBLE", the mobile phone 100 prohibits scheduling of the keep-alive process.

In conclusion, according to the process scheduling method provided in this application, for the first process with the first tag indicating that scheduling is prohibited in the process set, when the first process is instructed to be scheduled, the mobile phone 100 prohibits the scheduling of the first process. In this way, a CPU of the mobile phone 100 does not execute the first process, that is, the CPU does not allocate resources to the first process. Therefore, power consumption of the mobile phone 100 is reduced, and standby time of the mobile phone 100 is prolonged.

In addition, the mobile phone 100 may also generate a process scheduling log of the target application running in the foreground. The mobile phone 100 may also send the process scheduling log to a user terminal for display in response to a log acquisition request from a test terminal. In this way, the user may view the process scheduling log on a display interface of the test terminal.

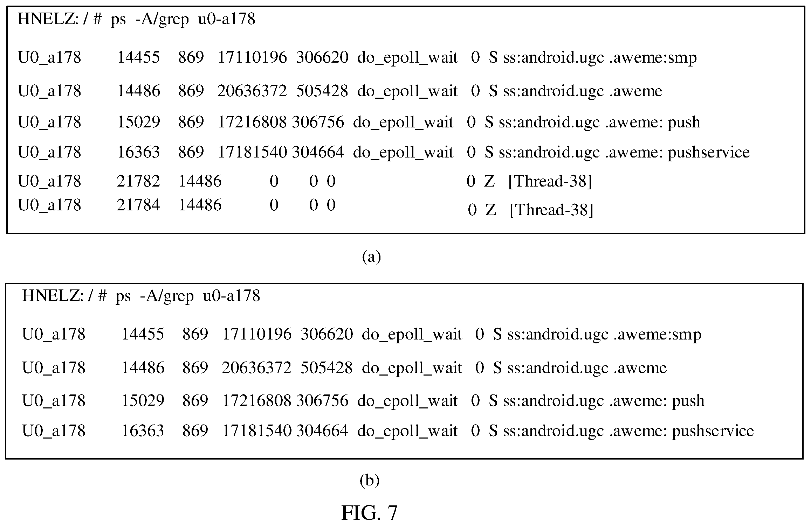

For example, when the target application is Kwai@, as shown in (a) in FIG. 7, in the conventional technology, a process scheduling log of Kwai@ includes a host process "com.ss.android.ugc.aweme", a message sending and receiving process 1 "com.ss.android.ugc.aweme:push", a keep-alive process A "[Thread-38]", a message sending and receiving process 2 "com.ss.android.ugc.aweme:pushservic", and a keep-alive process B "[Thread-38]". As shown in (b) in FIG. 7, in this embodiment of this application, a process scheduling log of Kwai@ includes a host process "com.ss.android.ugc.aweme", a message sending and receiving process 1 "com.ss.android.ugc.aweme:push", and a message sending and receiving process 2 "com.ss.android.ugc.aweme:pushservic" of Kwai@. It can be learned that, in this embodiment of this application, the keep-alive process of Kwai@ is prohibited from being scheduled.

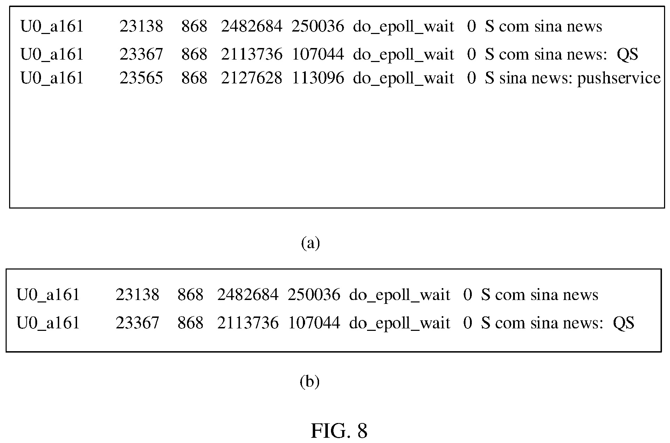

For example, when the target application is Sina^{®}, as shown in (a) in FIG. 8, in the conventional technology, a process scheduling log of Sina^{®} includes a news browsing process 1 "com sina news", a news browsing process 2 "com sina news: QS", a message sending and receiving process "com sina news: pushservic", and a plurality of ping processes "ping". As shown in (b) in FIG. 8, in this embodiment of this application, a process scheduling log of Sina@ includes a news browsing process 1 "com sina news", a news browsing process 2 "com sina news: QS", a message sending and receiving process "com sina news: pushservic", and a plurality of processes "ping". It can be learned that, in this embodiment of this application, the plurality of processes "ping" are prohibited from being scheduled.

In S401, for example, a function that is predefined by the mobile phone 100 and that can be perceived by the user is used as the target function to describe how the mobile phone marks a first tag for a first process in a process set of each application. In addition, when the target function is a function that is predefined by the mobile phone 100 and that the user is interested in, the mobile phone 100 may also mark a first tag for a first process in a process set of each application based on a type of the application, an operating parameter when the first process is executed, and whether a hardware module is invoked. For example, a specific implementation of S401 may also be as follows:

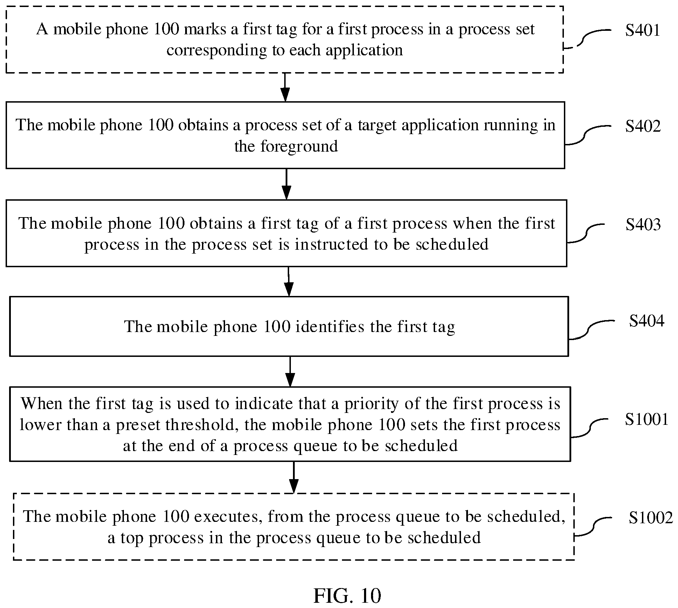

The mobile phone 100 determines whether a hardware module of the mobile phone 100 needs to be invoked to execute the first process. The mobile phone 100 obtains an operating parameter of the first process when the hardware module needs to be invoked. When the operating parameter meets a preset condition, the mobile phone 100 sets the first tag to indicate that scheduling is prohibited (in the following embodiment corresponding to FIG. 10, the first tag is set to a priority lower than a preset threshold).

For example, when the mobile phone 100 determines that the hardware module is a communication module, the operating parameter is a data transmission rate when the first process is executed. The mobile phone 100 determines a type of the target application. When the type of the target application is not an instant chat application, the mobile phone 100 determines whether the data transmission rate is lower than a preset rate threshold. When the data transmission rate is lower than the preset rate threshold, the mobile phone 100 sets the first tag to indicate that scheduling is prohibited (in the following embodiment corresponding to FIG. 10, the first tag is set to a priority lower than a preset threshold).

It may be understood that applications may be of different types, and processes in the process set of each application may have operating parameters. For example, an operating parameter of a message sending and receiving process of WeChat^{®} may include a data transmission rate: 1 k/s, and the like. Operating parameters of a video display process of Kwai@ may include a frame rate: 30 fps, a decoding format: an MP4 format, and the like. A page download process of Sina@ includes a data transmission rate: 100 k/s, and the like.

For example, Table 2 shows process sets, application types, and operating parameters of processes in the process sets corresponding to different applications.

**Table 2**

| Application name | Process name | Hardware module invoked | Operating parameter | Application type |
|---|---|---|---|---|
| WeChat^{®} | Message sending and receiving process | Communication module | Hardware module invoked: communication module; data transmission rate: 1 k/s, and the like. | Instant chat application |
| | Data download process | Communication module | Hardware module invoked: communication module; data transmission rate: 100 k/s | |
| | ... | ... | ... | |
| | Positioning process | GPS module | Hardware module invoked: GPS module; positioning accuracy: 100 m, and the like. | |
| | Keep-alive process | / | / | |
| Kwai@ | Message sending and receiving process | Communication module | Hardware module invoked: communication module; data transmission rate: 1 k/s, and the like. | Live streaming application |
| | Video display process | Display and video decoder | Hardware modules invoked: display, and video decoder Frame rate: 30 fps, decoding format: MP4 format, and the like. | |
| | ... | ... | ... | |
| | Audio playback process | Audio decoding module and speaker | Hardware modules invoked: audio decoding module, and speaker Audio format: mp3 format, and the like | |
| | Keep-alive process | / | / | |
| Sina^{®} | Message sending and receiving process | Communication module | Hardware module invoked: communication module; data transmission rate: 1 k/s, and the like. | News browsing application |
| | Page download process | Communication module | Hardware module invoked: communication module; data transmission rate: 100 k/s | |
| | Page display process | Display | Hardware module invoked: display; positioning accuracy: 100 m Display format: html format, and the like | |
| | ... | ... | ... | |
| | Keep-alive process | / | / | |

For example, the mobile phone 100 may obtain a type of a running application. When the type of the application run by the mobile phone 100 is a live streaming application (a non-instant chat application), and when a process is executed, a communication module is invoked for data transmission, and a data transmission rate is 1 k/s (lower than a preset rate threshold of 10 k/s), it indicates that the mobile phone 100 is performing a message sending and receiving function (the message sending and receiving function of the live streaming application is a function that the user is not interested in), then the process is determined as a message sending and receiving process, and a first tag of the message sending and receiving process of the live streaming application is marked to indicate that scheduling is prohibited.

When the type of the application run by the mobile phone 100 is an instant chat application, and when a process is executed, a communication module is invoked for data transmission, and a data transmission rate is 1 k/s, it indicates that the mobile phone 100 is performing a message sending and receiving function (the message sending and receiving function of the instant chat application is a function that the user is interested in), then the process is determined as a message sending and receiving process, and a first tag of the message sending and receiving process of the instant chat application is marked to indicate that scheduling is allowed.

In addition, when the type of the application run by the mobile phone 100 is an instant chat application, and when a process is executed, a communication module is invoked for data transmission, and a data transmission rate is 100 k/s, it indicates that the mobile phone 100 is performing a data download function (the data download function of the instant chat application is a function that the user is interested in), then the process is determined as a data download process, and a first tag of the data download process of the instant chat application is marked to indicate that scheduling is allowed.

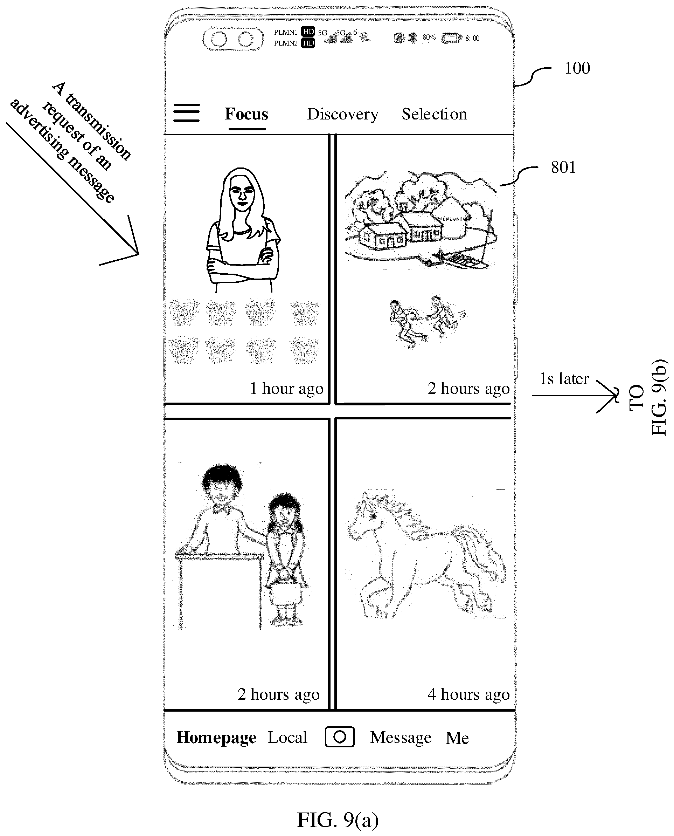

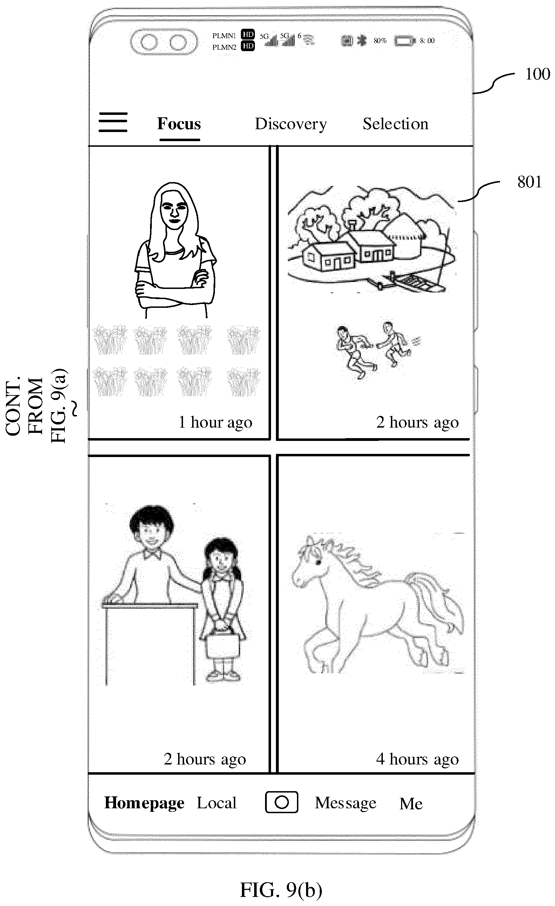

In this way, as shown in FIG. 9(a)-FIG. 9(b), when the mobile phone 100 responds to, on a homepage interface 901 displaying Kwai@, a transmission request of an advertising message, the mobile phone 100 instructs to schedule a message sending and receiving process of Kwai^{®}. Then, when the mobile phone 100 identifies that a first tag of the message sending and receiving process indicates that scheduling is prohibited, the message sending and receiving process is prohibited from being scheduled to receive the advertising message. Therefore, as shown in FIG. 9 (b), the mobile phone 100 does not display the advertising message in a notification bar.

In addition, in the foregoing embodiment, that when the first process is instructed to be scheduled, the mobile phone 100 prohibits the scheduling of the first process is used as an example to describe how to reduce power consumption of the mobile phone 100. In another embodiment, the mobile phone 100 may also allow a priority of the first process to be lower than that of another process in the process queue to be scheduled, so as to reduce power consumption of the mobile phone 100.

It may be understood that on the basis of FIG. 4, in the steps S401 to S404 and specific implementations thereof, the first tag used to indicate that the scheduling of the first process is prohibited may be replaced with a first tag indicating that the priority of the first process is lower than a preset threshold. When the first tag is replaced to indicate that the priority of the first process is lower than the preset threshold, as shown in FIG. 10, the solution of S405 may also be replaced with S 1001 and S 1002.

S 1001: When the first tag is used to indicate that a priority of the first process is lower than a preset threshold, the mobile phone 100 sets the first process at the end of a process queue to be scheduled.

For example, the mobile phone 100 determines the process queue to be scheduled as follows: The mobile phone 100 detects a process in a TASK_RUNNING state (TASK_RUNNING), that is, a process in the process queue to be scheduled.

S 1002: The mobile phone 100 executes, from the process queue to be scheduled, a top process in the process queue to be scheduled.

It can be learned that because the mobile phone 100 always executes, from the process queue to be scheduled, a top process in the process queue to be scheduled, in this way, the mobile phone 100 has a reduced probability of executing the first process, that is, the CPU allocates fewer resources to the first process, so that the power consumption of the mobile phone 100 is also reduced, and the standby time of the mobile phone 100 is prolonged.

For example, the first process is a keep-alive process or a message sending and receiving process of a live streaming application, the mobile phone 100 marks a keep-alive process of Kwai@ with a priority of "100", a video display process with a priority of "1", a video display process with a priority of "2", and a message sending and receiving process with a priority of "99". A process with a larger marked value has a lower priority. When the set threshold is 90, the keep-alive process and the message sending and receiving process of the live streaming application are lower than the set threshold.

When the keep-alive process or the message sending and receiving process is instructed to be scheduled, the keep-alive process or the message sending and receiving process of the mobile phone 100 is set at the end of the process queue to be scheduled. Generally, when the mobile phone 100 runs a live streaming application, a process queue to be scheduled usually includes a plurality of processes, and the processes in the process queue to be scheduled may be increased at any time. However, the mobile phone 100 preferentially executes a top process in the process queue. Because the keep-alive process or the message sending and receiving process is at the end of the queue to be scheduled, the mobile phone 100 has a low probability of scheduling the keep-alive process or the message sending and receiving process, so that power consumption of the mobile phone 100 is also reduced, and standby time of the mobile phone 100 is prolonged.

In addition, when the first tag is used to indicate that a priority of the first process is lower than a preset threshold, a specific implementation of marking the first tag for the first process by the mobile phone 100 in S401 may also be as follows: When the operation of the user is to terminate the first process being executed, and a quantity of termination times exceeds a preset threshold, the mobile phone 100 sets the first tag to a priority lower than the preset threshold.

When the mobile phone 100 runs a live streaming application in the foreground, the live streaming application is executing a message sending and receiving process to pop up an advertising window (not shown). The advertising window includes a third control, and the third control is used to indicate to close the advertising window. In response to a user-triggered operation on the third control, the mobile phone 100 terminates the message sending and receiving process being executed. When a quantity of times the message sending and receiving process is terminated is greater than a preset threshold, it indicates that the user is not interested in performing a target function corresponding to the message sending and receiving process. Therefore, the mobile phone 100 may mark a first tag of the message sending and receiving process of the live streaming application with a priority lower than a preset threshold.

In some other embodiments, content indicated by the first tag may also be updated based on an actual need of a user. For example, when the first tag is used to indicate that scheduling of the first process is prohibited, and a quantity of times the first process is instructed to be invoked is greater than a preset threshold. That the first process is instructed to be invoked is user-triggered, which indicates that the user needs to invoke the first process. Therefore, the mobile phone 100 updates the first tag, and the updated first tag is used to indicate a priority. In this way, when the first process is instructed to be scheduled again, the mobile phone 100 may set, based on the priority indicated by the first tag, the first process in a process queue to be scheduled, so as to meet a need of the user.

Alternatively, when the first tag is used to indicate that a priority is lower than a preset threshold, and a quantity of times the first process is instructed to be invoked is greater than a preset threshold. That the first process is instructed to be invoked is user-triggered, which indicates that the user needs to invoke the first process preferentially. Therefore, the mobile phone 100 updates the first tag, and the priority indicated by the updated first tag is higher than the set threshold. In this way, when the first process is instructed to be scheduled again, the mobile phone 100 may set, based on the priority indicated by the first tag, the first process in the process queue to be scheduled, so as to meet a need of the user.

In addition, the mobile phone 100 obtains a first tag of a second process when the second process in the process set is instructed to be scheduled. The mobile phone 100 identifies the first tag of the second process. When the first tag of the second process of the mobile phone 100 is used to indicate that scheduling of the second process is prohibited, the mobile phone 100 prohibits the scheduling of the second process; or when the first tag of the second process is used to indicate that a priority of the second process is lower than a preset threshold, the mobile phone 100 sets the second process at the end of a process queue to be scheduled. It may be understood that a principle of scheduling the second process by the mobile phone 100 is the same as the principle of scheduling the first process by the mobile phone 100, and details are not described herein again.

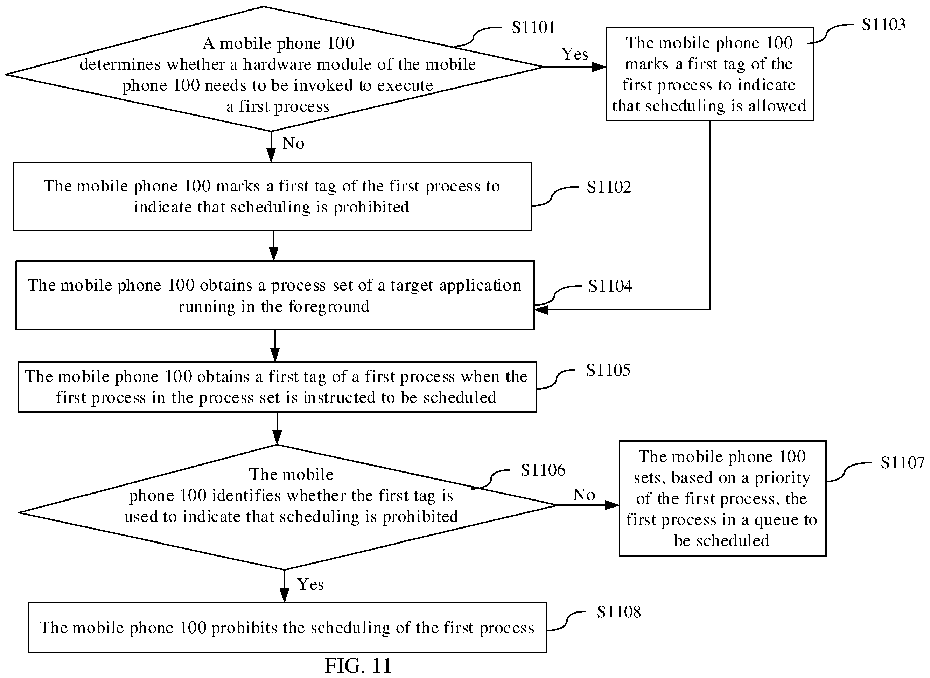

It may be understood that an implementation of the process scheduling method provided in this embodiment of this application may be summarized as a procedure shown in FIG. 11. As shown in FIG. 11, the process scheduling method provided in this embodiment of this application includes:
S1101: The mobile phone 100 determines whether a hardware module of the mobile phone 100 is invoked to execute a first process, and performs S 1102 if a hardware module is not invoked to execute the first process, or performs S1103 if a hardware module is invoked to execute the first process.

S1102: The mobile phone 100 marks a first tag of the first process to indicate that scheduling is prohibited.

S1103: The mobile phone 100 marks the first tag of the first process to indicate that scheduling is allowed.

After S1102 or S1103, the process scheduling method provided in this embodiment of this application further includes:
S1104: The mobile phone 100 obtains a process set of a target application running in the foreground.

S 1105: The mobile phone 100 obtains a first tag of a first process when the first process in the process set is instructed to be scheduled.

S1106: The mobile phone 100 identifies whether the first tag is used to indicate that scheduling is prohibited, and performs S 1107 if the first tag is used to indicate that scheduling is prohibited, or performs S 1108 if the first tag is not used to indicate that scheduling is prohibited.

S1107: The mobile phone 100 prohibits the scheduling of the first process.

S1108: The mobile phone 100 sets, based on a priority of the first process, the first process in a queue to be scheduled.

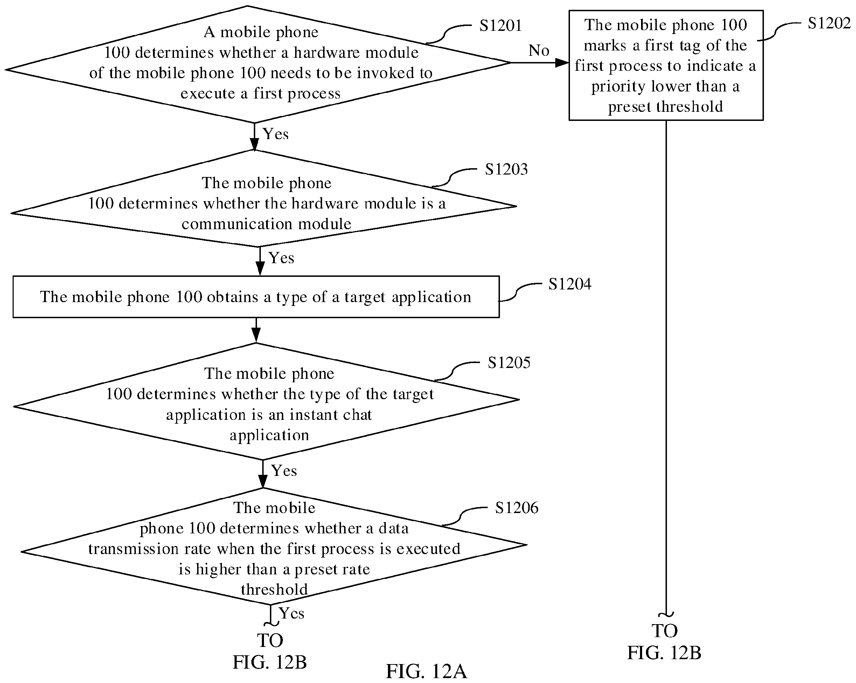

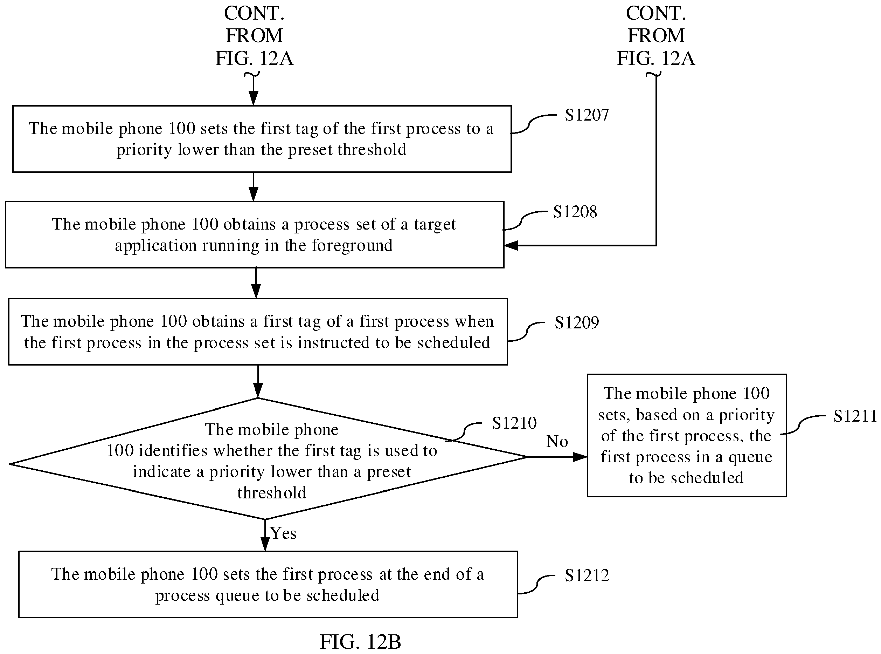

It may be understood that another implementation of the process scheduling method provided in this embodiment of this application may be summarized as a procedure shown in FIG. 12A-FIG. 12B. As shown in FIG. 12A-FIG. 12B, the process scheduling method provided in this embodiment of this application includes:
S1201: The mobile phone 100 determines whether a hardware module of the mobile phone 100 is invoked to execute a first process, and performs S 1202 if a hardware module is not invoked to execute the first process, or performs S1203 if a hardware module is invoked to execute the first process.

S1202: The mobile phone 100 marks a first tag of the first process to indicate a priority lower than a preset threshold, and then jumps to S1208.

S1203: The mobile phone 100 determines whether the hardware module is a communication module, and performs S 1204 if the hardware module is a communication module.

S1204: The mobile phone 100 obtains a type of a target application.

S 1205: The mobile phone 100 determines whether the type of the target application is an instant chat application, and performs S1206 if the type of the target application is an instant chat application.

S 1206: The mobile phone 100 determines whether a data transmission rate when the first process is executed is higher than a preset rate threshold, and performs S1207 if the data transmission rate when the first process is executed is higher than a preset rate threshold.

S1207: The mobile phone 100 sets the first tag of the first process to a priority lower than the preset threshold.

S1208: The mobile phone 100 obtains a process set of a target application running in the foreground.

S1209: The mobile phone 100 obtains a first tag of a first process when the first process in the process set is instructed to be scheduled.

S1210: The mobile phone 100 identifies whether the first tag is used to indicate a priority lower than a preset threshold, and performs S1211 if the first tag is used to indicate a priority lower than a preset threshold, or performs S 1212 if the first tag is not used to indicate a priority lower than a preset threshold.

S1211: The mobile phone 100 sets the first process at the end of a process queue to be scheduled.

S1212: The mobile phone 100 sets, based on a priority of the first process, the first process in a queue to be scheduled.

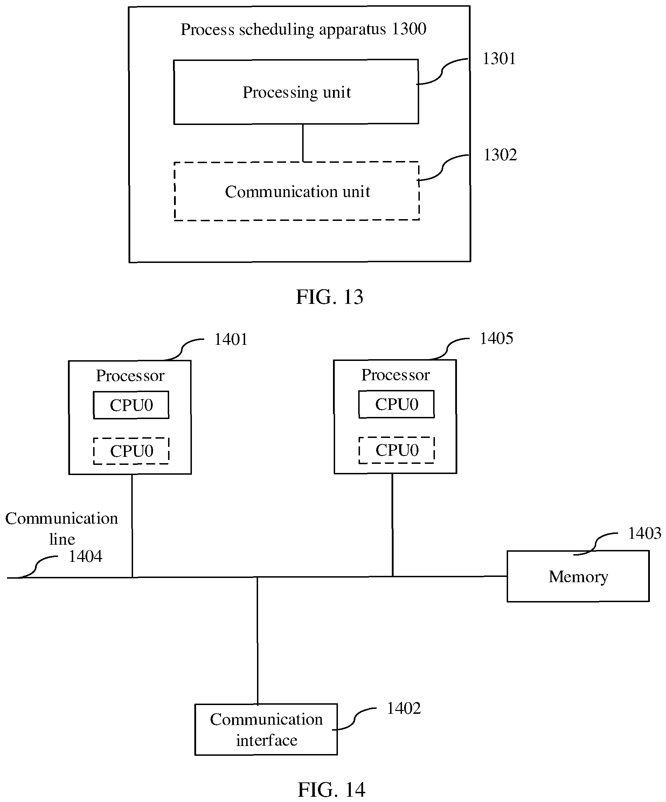

As shown in FIG. 13, this application provides a process scheduling apparatus 1300, including: a processing unit 1301, configured to: obtain a process set of a target application running in the foreground; obtain a first tag of a first process when the first process in the process set is instructed to be scheduled; identify the first tag; and when the first tag is used to indicate that scheduling of the first process is prohibited, prohibit the scheduling of the first process; or when the first tag is used to indicate that a priority of the first process is lower than a preset threshold, set the first process at the end of a process queue to be scheduled.

In a possible implementation, the first tag is a TASK_INTERRUPTIBLE identifier, a TASK_STOPPED identifier, or a TASK_TRACED identifier. The TASK_INTERRUPTIBLE identifier, the TASK_STOPPED identifier, or the TASK_TRACED identifier is used to indicate that scheduling of the first process is prohibited.

In a possible implementation, the processing unit 1301 is further configured to execute, from the process queue to be scheduled, a top process in the process queue to be scheduled.

In a possible implementation, the processing unit 1301 is further configured for the terminal device to mark the first tag for the first process.

Further, the processing unit 1301 is specifically configured to: determine whether a hardware module of the terminal device needs to be invoked to execute the first process; and when the hardware module does not need to be invoked, mark the first tag of the first process to indicate that scheduling is prohibited.

Further, the processing unit 1301 is specifically configured to: obtain an operating parameter of the first process when the hardware module needs to be invoked; and set the first tag to a priority lower than a preset threshold when the operating parameter meets a preset condition.

Further, when it is determined that the hardware module is a communication module, the operating parameter is a data transmission rate when the first process is executed. The processing unit 1301 is specifically configured to: obtain a type of a target application; when the type of the target application is not an instant chat application, determine whether the data transmission rate is lower than a preset rate threshold; and when the data transmission rate is lower than the preset rate threshold, set the first tag to a priority lower than the preset threshold.

In a possible implementation, the processing unit 1301 is further configured for the terminal device to: obtain a first tag of a second process when the second process in the process set is instructed to be scheduled, and identify the first tag of the second process; and when the first tag of the second process is used to indicate that scheduling of the second process is prohibited, prohibit the scheduling of the second process; or when the first tag of the second process is used to indicate that a priority of the second process is lower than a preset threshold, set the second process at the end of a process queue to be scheduled.

In a possible implementation, the processing unit 1301 is further configured to: update the first tag when the first tag is used to indicate that scheduling of the first process is prohibited, and a quantity of times the first process is instructed to be invoked is greater than a preset threshold, where the updated first tag is used to indicate a priority; or update the first tag when the first tag is used to indicate that a priority is lower than a preset threshold, and a quantity of times the first process is instructed to be invoked is greater than a preset threshold, where a priority indicated by the updated first tag is higher than the preset threshold; and that the first process is instructed to be invoked is user-triggered.

In a possible implementation, the first process is a keep-alive process, or a message receiving process of a non-instant chat application.

In a possible implementation, the processing unit 1301 is further configured for the terminal device to mark the first tag for the first process in response to an operation of a user.

Further, when the operation of the user is to prohibit a target function corresponding to the first process, the processing unit 1301 is further configured to mark the first tag of the first process to indicate that scheduling is prohibited; or further, when the operation of the user is to terminate the first process being executed, and a quantity of termination times exceeds a preset threshold, the processing unit 1301 is further configured to set the first tag to a priority lower than the preset threshold.

In a possible implementation, the processing unit 1301 is further configured to generate a process scheduling log of the target application running in the foreground. The process scheduling apparatus 1300 may further include: a communication unit 1302, configured to send the process scheduling log to a test terminal in response to a log acquisition request from the test terminal.

For example, FIG. 14 is a schematic diagram of a hardware structure of a terminal device according to an embodiment of this application. As shown in FIG. 14, the terminal device includes a processor 1401, a communication line 1404, and at least one communication interface (for example, in FIG. 14, a communication interface 1403 is used as an example for description).

The processor 1401 may be a general-purpose central processing unit (central processing unit, CPU), a microprocessor, an application-specific integrated circuit (application-specific integrated circuit, ASIC), or one or more integrated circuits for controlling program execution in the solutions of this application.

The communication line 1404 may include a circuit for transmitting information among the foregoing components.

The communication interface 1403, using any device such as a transceiver, is configured to communicate with other devices or communication networks, such as Ethernet, and a wireless local area network (wireless local area networks, WLAN).

Possibly, the terminal device may further include a memory 1402.

The memory 1402 may be a read-only memory (read-only memory, ROM) or another type of static storage device capable of storing static information and instructions, a random access memory (random access memory, RAM) or another type of dynamic storage device capable of storing information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile discs, a Blu-ray disc, and the like), magnetic disc storage medium or another magnetic storage device, or any other medium that can be used to carry or store desired program code in the form of instructions or data structures and that can be accessed by a computer, but is not limited thereto. The memory may be stand-alone and connected to the processor through the communication line 1404. The memory may alternatively be integrated with the processor.

The memory 1402 is configured to store computer-executable instructions for executing the solutions in this application under control of the processor 1401. The processor 1401 is configured to execute computer-executable instructions stored in the memory 1402 to implement the process scheduling method according to the embodiments of this application.

Possibly, the computer-executable instructions in this embodiment of this application may alternatively be referred to as application code, which is not specifically limited in this embodiment of this application.

During specific implementation, in an embodiment, the processor 1401 may include one or more CPUs, such as a CPU0 and a CPU1 in FIG. 14.

During specific implementation, in an embodiment, the terminal device may include a plurality of processors, such as a processor 1401 and a processor 1405 in FIG. 14. Each of these processors may be a single-core (single-CPU) processor or a multi-core (multi-CPU) processor. The processor herein may refer to one or more devices, circuits, and/or processing cores for processing data (such as computer program instructions).

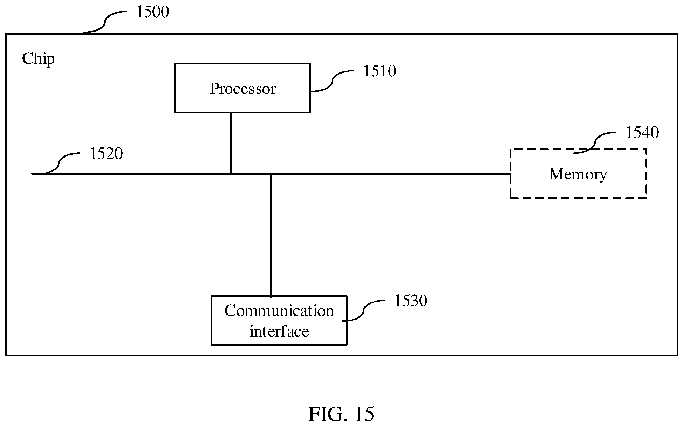

For example, FIG. 15 is a schematic diagram of a structure of a chip according to an embodiment of this application. A chip 150 includes one or more than two (including two) processors 1510 and a communication interface 1530.

In some implementations, a memory 1540 stores the following elements: an executable module or a data structure, or a subset thereof, or an extended set thereof.

In this embodiment of this application, the memory 1540 may include a read-only memory and a random access memory, and provide instructions and data to the processor 1510. A part of the memory 1540 may further include a non-volatile random access memory (non-volatile random access memory, NVRAM).

In this embodiment of this application, the memory 1540, the communication interface 1530, and the memory 1540 are coupled together by using a bus system 1520. The bus system 1520 may further include a power bus, a control bus, and a status signal bus in addition to a data bus. For convenience of description, various buses are marked as the bus system 1520 in FIG. 15.

The method described in this embodiment of this application may be applied to the processor 1510 or implemented by the processor 1510. The processor 1510 may be an integrated circuit chip with a signal processing capability. During implementation, the steps of the method may be performed by using an integrated logic circuit of hardware in the processor 1510 or by using instructions in a form of software. The processor 1510 may be a general-purpose processor (such as a microprocessor or a conventional processor), a digital signal processor (digital signal processing, DSP), an application specific integrated circuit (application specific integrated circuit, ASIC), a field-programmable gate array (field-programmable gate array, FPGA), or another programmable logic device, a discrete gate, a transistor logic device, or a discrete hardware component. The processor 1510 may implement or execute the methods, steps and logic block diagrams disclosed in the embodiments of this application.

The steps of the method disclosed in the embodiments of this application may be directly performed by a hardware decoding processor, or by a combination of hardware and software modules in the decoding processor. The software module may be located in a mature storage medium in the art, such as a random access memory, a read only memory, a programmable read only memory, or an electrically erasable programmable read only memory (electrically erasable programmable read only memory, EEPROM). The storage medium is located in the memory 1540, and the processor 1510 reads information in the memory 1540 and completes the steps of the foregoing method in combination with hardware in the processor 1510.

In the foregoing embodiments, the instructions stored in the memory for execution by the processor may be implemented in the form of a computer program product. The computer program product may be written in the memory in advance, or may be downloaded and installed in the memory in the form of software.

The computer program product includes one or more computer instructions. When the computer program instructions are loaded and executed on the computer, the procedure or functions according to embodiments of this application are completely or partially generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one network site, computer, server or data center to another network site, computer, server or data center in a wired (such as coaxial cable, optical fiber, or digital subscriber line (DSL)) or wireless (such as infrared, wireless, or microwave) manner. The computer-readable storage medium may be any available medium accessible by a computer, or a data storage device such as a server or a data center, integrating one or more available media. For example, the available medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in embodiments may be implemented by software, hardware, firmware, or any combination thereof. The computer-readable medium may include a computer storage medium and a communication medium, and may include any medium that may transmit a computer program from one place to another. The storage medium may be any target medium accessible by the computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disc memory or another disk storage device. In addition, any connecting line may be appropriately referred to as a computer-readable medium. For example, if software is transmitted from a website, a server or another remote source by using a coaxial cable, an optical fiber cable, a twisted pair, a DSL or wireless technologies (for example, infrared, radio, and microwave), the coaxial cable, the optical fiber cable, the twisted pair, the DSL or wireless technologies such as infrared, radio and microwave are included in the definition of medium. As used herein, magnetic and optical discs include a compact disc (CD), a laser disc, an optical disc, a digital versatile disc (digital versatile disc, DVD), a floppy disc, and a Blu-ray disc, and the magnetic disc usually reproduces data magnetically, while the optical disc reproduces data optically using lasers.

The foregoing combinations should also be included in the scope of the computer-readable medium. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A process scheduling method, wherein the method comprises:
obtaining, by a terminal device, a process set of a target application running in the foreground;
obtaining, by the terminal device, a first tag of a first process when the first process in the process set is instructed to be scheduled;
identifying, by the terminal device, the first tag; and
when the first tag is used to indicate that scheduling of the first process is prohibited, prohibiting, by the terminal device, the scheduling of the first process; or
when the first tag is used to indicate that a priority of the first process is lower than a preset threshold, setting, by the terminal device, the first process at the end of a process queue to be scheduled.

2. The method according to claim 1, wherein the first tag is a TASK_INTERRUPTIBLE identifier, a TASK_STOPPED identifier, or a TASK_TRACED identifier, and the TASK_INTERRUPTIBLE identifier, the TASK_STOPPED identifier, or the TASK_TRACED identifier is used to indicate that scheduling of the first process is prohibited.

3. The method according to claim 1, wherein after the setting, by the terminal device, the first process at the end of a process queue to be scheduled, the method further comprises:
executing, by the terminal device, from the process queue to be scheduled, a top process in the process queue to be scheduled.

4. The method according to claim 1, wherein before the obtaining, by a terminal device, a process set of a target application running in the foreground, the method further comprises:
marking, by the terminal device, the first tag for the first process.

5. The method according to claim 4, wherein the marking, by the terminal device, the first tag for the first process comprises:
determining, by the terminal device, whether a hardware module of the terminal device needs to be invoked to execute the first process; and
when the hardware module does not need to be invoked, marking, by the terminal device, the first tag of the first process to indicate that scheduling is prohibited.

6. The method according to claim 5, wherein the method further comprises: obtaining, by the terminal device, an operating parameter of the first process when the hardware module needs to be invoked; and
setting, by the terminal device, the first tag to a priority lower than a preset threshold when the operating parameter meets a preset condition.

7. The method according to claim 6, wherein when the terminal device determines that the hardware module is a communication module, the operating parameter is a data transmission rate when the first process is executed; and
the setting, by the terminal device, the first tag to a priority lower than a preset threshold when the operating parameter meets a preset condition comprises:
obtaining, by the terminal device, a type of the target application;
when the type of the target application is not an instant chat application, determining, by the terminal device, whether the data transmission rate is lower than a preset rate threshold; and
when the data transmission rate is lower than the preset rate threshold, setting, by the terminal device, the first tag to a priority lower than the preset threshold.

8. The method according to claim 1, wherein the method further comprises:
obtaining, by the terminal device, a first tag of a second process when the second process in the process set is instructed to be scheduled;
identifying, by the terminal device, the first tag of the second process; and
when the first tag of the second process is used to indicate that scheduling of the second process is prohibited, prohibiting, by the terminal device, the scheduling of the second process; or
when the first tag of the second process is used to indicate that a priority of the second process is lower than a preset threshold, setting, by the terminal device, the second process at the end of a process queue to be scheduled.

9. The method according to claim 1, wherein the method further comprises:
updating, by the terminal device, the first tag when the first tag is used to indicate that scheduling of the first process is prohibited, and a quantity of times the first process is instructed to be invoked is greater than a preset threshold, wherein the updated first tag is used to indicate a priority; or
updating, by the terminal device, the first tag when the first tag is used to indicate that a priority is lower than a preset threshold, and a quantity of times the first process is instructed to be invoked is greater than a preset threshold, wherein a priority indicated by the updated first tag is higher than the preset threshold; and
that the first process is instructed to be invoked is user-triggered.

10. The method according to any one of claims 1 to 9, wherein the first process is a keep-alive process, or a message receiving process of a non-instant chat application.

11. The method according to any one of claims 1 to 9, wherein before the obtaining, by a terminal device, a process set of a target application running in the foreground, the method further comprises:
marking, by the terminal device, the first tag for the first process in response to an operation of a user.

12. The method according to claim 11, wherein when the operation of the user is to prohibit a target function corresponding to the first process, the terminal device marks the first tag of the first process to indicate that scheduling is prohibited.

13. The method according to claim 11, wherein when the operation of the user is to terminate the first process being executed, and a quantity of termination times exceeds a preset threshold, the terminal device sets the first tag to a priority lower than the preset threshold.

14. The method according to claim 1, wherein after the prohibiting, by the terminal device, the scheduling of the first process, or the setting, by the terminal device, the first process at the end of a process queue to be scheduled, the method further comprises:
generating, by the terminal device, a process scheduling log of the target application running in the foreground; and
sending, by the terminal device, the process scheduling log to a test terminal in response to a log acquisition request from the test terminal.

15. A terminal device, comprising a memory, a processor, and a computer program stored in the memory and capable of running on the processor, wherein the processor, when executing the computer program, enables the terminal device to perform the method according to any one of claims 1 to 14.

16. A computer-readable storage medium, wherein the computer-readable storage medium stores a computer program, and the computer program, when executed by a processor, enables a computer to perform the method according to any one of claims 1 to 14.

17. A computer program product, comprising a computer program, wherein the computer program, when run, enables a computer to perform the method according to any one of claims 1 to 14.
